# EUROPEAN PATENT APPLICATION

(11) **EP 4 656 022 A1**
(43) Date of publication of application: **03.12.2025**
(21) Application number: 24211798.4
(22) Date of filing: 08.11.2024
(51) Int. Cl.: A01B 1/02, B25G 1/10, A01D 7/00, A01D 9/00

(54) **SHAFT OF HAND TOOL FOR AGRICULTURAL, HORTICULTURAL OR EARTH WORK**

(30) Priority: 29.05.2024 JP 2024086948
(71) Applicant: Asaka Industrial Co., Ltd, Sakai-shi, Osaka 590-0982 (JP)
(72) Inventor: FURUKAWA, Tomoyasu, Osaka, 590-0982 (JP); TAKENAKA, Ryosuke, Osaka, 590-0982 (JP)
(74) Representative: Müller Schupfner & Partner Patent- und Rechtsanwaltspartnerschaft mbB (Hamburg)

(57) **Abstract**

A shaft 10 of a hand tool for an agricultural, horticultural or an earth work includes a cylindrical, metal, shaft main body 20, and two or a greater number of curved ribs 30 (31, 32) provided longitudinally inside the shaft main body 20. Each curved rib 30 (31, 32) is provided by a platy member having an arcuate section and formed integrally with the shaft main body 20 so that a curved bulged portion of one curved rib is opposed to another curved bulged portion of another curbed rib inside the shaft main body 20 without contacting each other, sharing a predetermined distance in between.

## Description

### TECHNICAL FIELD

The present invention relates, mainly, to a shaft of a hand tool used primarily in agricultural work (including horticultural work), earth work and so on and in a more detailed embodiment to a shaft of a hand tool for an agricultural, horticultural or an earth work includes a cylindrical, metal, shaft main body, and two or a greater number of curved ribs provided longitudinally inside the shaft main body 20. Each curved rib is provided by a platy member having an arcuate section and formed integrally with the shaft main body so that a curved bulged portion of one curved rib is opposed to another curved bulged portion of another curbed rib inside the shaft main body without contacting each other, sharing a predetermined distance in between.

### BACKGROUND ART

Traditionally, hand tools used in, for example, agricultural work, horticultural work or earth work, such as shovels, scoops, spades, forks, pickaxes, hammers, hoes, plows, short-blade plows, rakes, prong rakes, blooms, weed scrapers, etc. are generally composed of a working part made of a metal and a wooden shaft attached thereto. In recent years, however, as shown in Japanese Utility Model No. 3112816 for example, metal shafts are also widely used for rigidity and durability. In this case, in view of workability, i.e., in order to make the shaft light enough, the shaft is often made of a light metal such as aluminum, and is formed into a pipe-like shape.

In a case where the hand tool shaft and the working part are connected with each other, there is employed a connecting structure, in which the working part is formed with a tubular socket portion for insertion of the shaft, the tip end portion of the shaft is inserted into the socket portion, and the two portions are fixed together. In this case, the socket portion is formed into a tubular shape having a generally C-shaped section, with a slit in its longitudinal direction. With this, the socket portion is formed to have a decreasing diameter toward the working part, so when the shaft is tapered at its end portion and pressed into the socket portion, the socket portion is expanded in diameter to conform to the shape of the tip portion of the shaft, resulting in decreased wobble, increased area of contact between the working part and the shaft, and increased strength of the connecting portion.

Now, in a case where the hand tool shaft is provided by a metal shaft and the shaft is connected with the working part such as a scooping blade, a swaging process is performed sometimes to a tip portion of the shaft on the connecting side. Then, after the shaft is inserted into the insertion portion of in the working part which is formed with the longitudinal slit, the two parts are fixed together by means of welding, bolting or otherwise.

However, even those shafts which are provided by a metal pipe as described above can bend or break during use. To this problem, means for increasing rigidity is available although the technique comes from a different technical field. As an example, Japanese Utility Model Application Laid-Open No. 3-25091 (Patent Publication 1), discloses a hard pipe. The pipe described in the Publication has a cylindrical shape as a whole, with reinforcing ribs extending inward.
The reinforcing ribs are provided at a plurality of locations on the inner surface of the pipe. Further, the reinforcing ribs and the pipe are formed integrally with each other.

### CITATION LIST

### PATENT LITERATURE

Patent Literature 1: Japanese Utility Model Application Laid-Open No. 3-25091 Gazette, page 1

### SUMMARY OF INVENTION

### TECHNICAL PROBLEM

However, according to the reinforcing ribs described in the Publication, the reinforcing ribs provided inside the shaft are connected with each other, and the presence of the reinforcing ribs makes it impossible to reduce the diameter at a tip portion of the shaft. Therefore, it is impossible to perform the swaging process if the reinforcing ribs of the arrangement described above stay inside.

The present invention was made under the circumstances describe above, and it is therefore an object of the present invention to provide a shaft for such hand tools as listed above, provided with reinforcing ribs yet compatible with a swaging process.

An object of the present invention is to provide a shaft for a hand tool, provided with reinforcing ribs yet compatible with a swaging process.

### SOLUTION TO PROBLEM

The shaft of a hand tool for an agricultural, horticultural or an earth work according to Claim 1 includes a cylindrical, metal, shaft main body, and two or a greater number of curved ribs provided longitudinally inside the shaft main body. Each curved rib is provided by a platy member having an arcuate section and formed integrally with the shaft main body so that a curved bulged portion of one curved rib is opposed to another curved bulged portion of another curbed rib inside the shaft main body without contacting each other, sharing a predetermined radial distance in between.

According to the shaft of a hand tool for an agricultural, horticultural or an earth work described in Claim 1, it is possible to increase strength of the shaft main body with the curved ribs. In addition, each curved rib is provided by a platy member having an arcuate section, and is formed in such a fashion that the curved bulged portion of one curved rib is opposed to another curved bulged portion of another curbed rib inside the shaft main body without contacting each other, sharing a predetermined radial distance in between. Therefore, when the swaging process is performed to taper an end portion, the curved ribs deform inward with a decreasing curvature, toward the inner center of the shaft main body. In other words, the shaft is compatible with a swaging process.

The shaft of a hand tool for an agricultural, horticultural or an earth work according to Claim 2 is provided by the shaft of a hand tool for an agricultural, horticultural or an earth work according to Claim 1 characterized by that two through four of the curved ribs are formed along an entire or partial length of the shaft main body.

According to the shaft of a hand tool for an agricultural, horticultural or an earth work described in Claim 2, it is possible to increase strength without significantly increasing the weight of the curved ribs since the number of the curved ribs is limited to two through four.

The shaft of a hand tool for an agricultural, horticultural or an earth work according to Claim 3 is provided by the shaft of a hand tool for an agricultural, horticultural or an earth work according to Claim 1 or 2 characterized by that a swaging process is performed to one or two end portions of the shaft main body.

According to the shaft of a hand tool for an agricultural, horticultural or an earth work described in Claim 3, it is possible to perform a swaging process also to the end portion which is closer to a handle of the working part.

The hand tools for an agricultural, horticultural or an earth work according to Claims 4 and 5 each includes one of the above-described shafts. Since the shaft is provided by one of those shafts of a hand tool for an agricultural, horticultural or an earth work described in Claims 1 through 3, it is possible to perform a swaging process to the shaft while it is also possible to increase strength of the shaft main body.

### ADVANTAGEOUS EFFECTS OF INVENTION

According to the shaft of a hand tool for an agricultural, horticultural or an earth work described in Claim 1, it is possible to increase strength of the shaft main body with the curved ribs.
In addition, each curved rib is provided by a platy member having an arcuate section, and is formed in such a fashion that the curved bulged portion of one curved rib is opposed to another curved bulged portion of another curbed rib inside the shaft main body without contacting each other, sharing a predetermined radial distance in between. Therefore, when the swaging process is performed to taper an end portion, the curved ribs deform inward with a decreasing curvature, toward the inner center the shaft main body, i.e., it is possible to perform a swaging process.

According to the shaft of a hand tool for an agricultural, horticultural or an earth work described in Claim 2, it is possible to provide the shaft of a hand tool for an agricultural, horticultural or an earth work according to Claim 1 with two through four of the curved ribs formed along an entire or partial length of the shaft main body. Therefore, it is possible to suitably increase strength without significantly increasing the weight of the curved ribs.

According to the shaft of a hand tool for an agricultural, horticultural or an earth work described in Claim 3, it is possible to perform a swaging process to one or two end portions of the shaft main body of the shaft of a hand tool for an agricultural, horticultural or an earth work according to Claim 1 or 2, i.e., it is possible to perform a swaging process also to the end portion closer to a handle of the working part.

According to the hand tools for an agricultural, horticultural or an earth work according to Claims 4 and 5, each include one of the above-described shafts. Since the shaft is provided by one of those shafts of a hand tool for an agricultural, horticultural or an earth work described in Claims 1 through 3, it is possible to perform a swaging process to the shaft while it is also possible to increase strength of the shaft main body.

### BRIEF DESCRIPTION OF DRAWINGS

Fig. 1 is a perspective view which shows a shaft for a hand tool according to an embodiment of the present invention.
Fig. 2 is a process diagram which shows how to swage the hand tool shaft.
Fig. 3(a) is an end view taken in line A-A in Fig. 2; Fig. 3(b) is an end view taken in line B-B in Fig. 2; and Fig. 3(c) is an end view taken in line C-C in Fig. 2.
Fig. 4 is a plan view of the shaft in Fig. 2(c).
Fig. 5 shows a working part of a scooping shovel; Fig. 5(a) is a plan view, Fig. 5(b) is a side view, and Fig. 5(c) is a bottom view.
Fig. 6 shows the shovel's working part with the shaft attached thereto; Fig. 6(a) is a plan view; Fig. 5(b) is a side view.
Fig. 7 shows hand tool shafts according to other embodiments in end views; Fig. 7(a) is an end view of a hand tool shaft formed with three reinforcing ribs; and Fig. 7(b) is an end view of a hand tool shaft formed with four reinforcing ribs.

### DESCRIPTION OF EMBODIMENTS

Hereinafter, a best mode for carrying out the present invention will be described specifically with reference to the drawings.

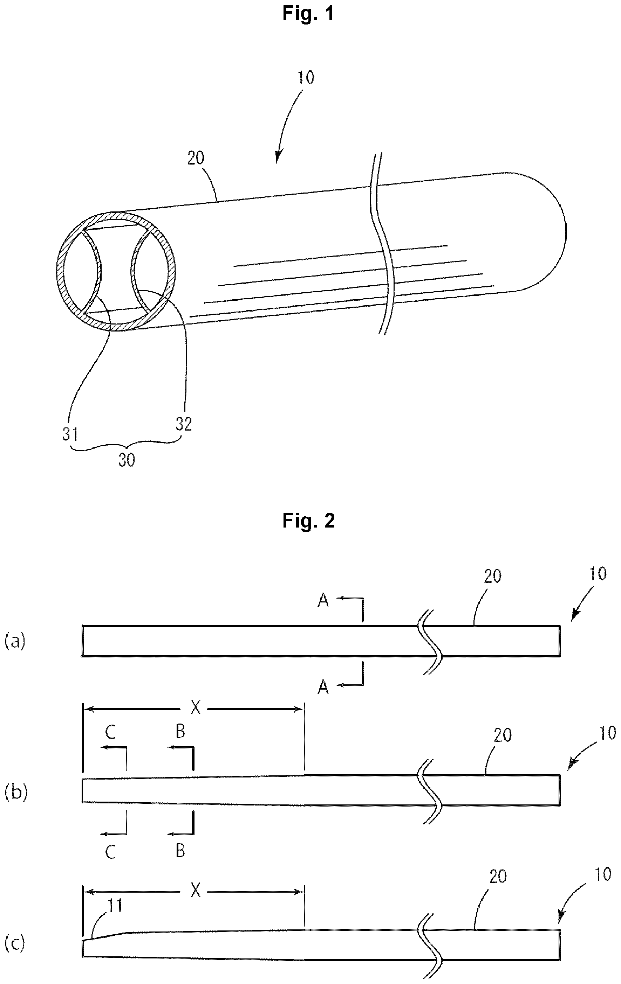

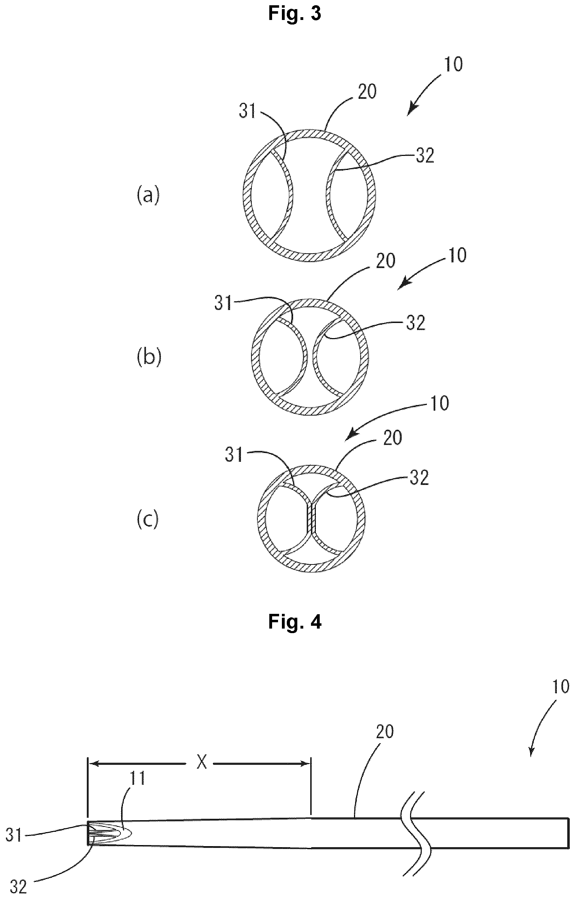

Fig. 1 is a perspective view which shows a hand tool shaft according to an embodiment of the present invention; Fig. 2 is a process diagram which shows how to swage a tip portion of the hand tool shaft; Fig. 3(a) is an end view taken in line A-A in Fig. 2; Fig. 3(b) is an end view taken in line B-B in Fig. 2; Fig. 3(c) is an end view taken in line C-C in Fig. 2; and Fig. 4 is a plan view of the shaft in Fig. 2(c).

In Fig. 1 through Fig. 4, a reference number 10 indicates a shaft according to the present invention, of a hand tool for use in agricultural work, horticultural work or earth work (hereinafter, will be referred to as "hand tool"). As shown in Fig. 1 and Fig. 2(a), the shaft 10 of the hand tool is provided by a long, metal, cylindrical, shaft main body 20, integrally formed therein with curved ribs 30 (31, 32) bulging toward a radial center of the shaft main body 20.

The curved ribs 30 (31, 32) are formed as a pair of platy members each having an arcuate cross-section. Inside the shaft, the pair of platy members 31 have their bulged portions opposed to each other. Further, the platy member 31 and the platy member 32 are formed so that their bulged portions are spaced from each other by a predetermined distance.

Fig. 2 is a process diagram which shows a swaging process performed to a tip portion of the hand tool shaft 10, and part of the tip portion is cut off for easy and strong attachment to the working part. Since the hand tool shaft 10 according to the present invention has the arrangement described above, it is possible to perform a swaging process (drawing process) to its end portion, while it is also possible to increase strength with the reinforcing ribs 30 (31, 32).

Fig. 2(a) is a side view of the shaft 10; Fig. 2(b) is a side view which shows a state when a swaging process is performed to a tip portion X (which is the portion to be inserted into the working part). Fig. 3(a) through Fig. 3(c) are end views taken in lines A-A, B-B and C-C in Fig. 2(a) and Fig. 2(b).

The shaft main body 20 of the shaft 10 is pipe-like, made of an aluminum alloy, has an outer diameter of 34 mm and a wall thickness of 2 mm, being manufactured by means of extrusion molding method. The curved ribs 30 (31, 32) inside the shaft 20 are formed integrally with the shaft main body 20. The curved ribs 30 (31, 32) have a thickness of 2 mm, and a curvature of R17 mm. Thus, as shown in Fig. 2(b), when formed into a tapered shape toward the tip, the bulged portions of the curved ribs 30 (31, 32) which are spaced from each other by a predetermined distance deform inward with a decreasing curvature, toward the inner center. At the farthest end portion, the bulged portions make contact with each other, and as the swaging pressure is increased, the portions of contact are recessed and fixed in place while keeping in contact with each other, resulting in increased strength.

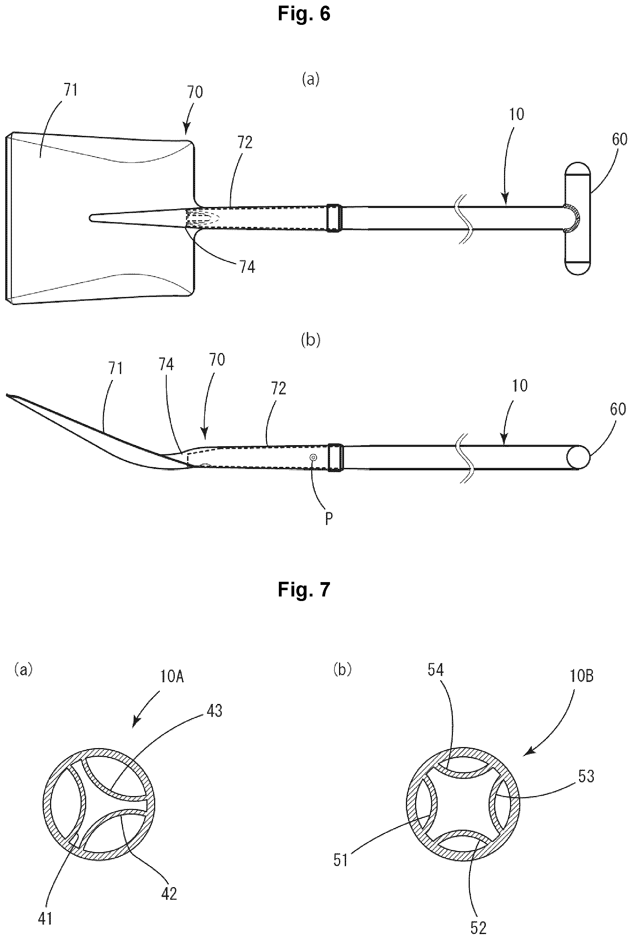

As shown in Fig. 2(c) and Fig. 4, the shaft 10 is provided with a cutout 11 in its upper surface at the very end portion thereof for deep insertion into a socket portion 72 of the working part 70 (see Fig. 6) which will be described later.

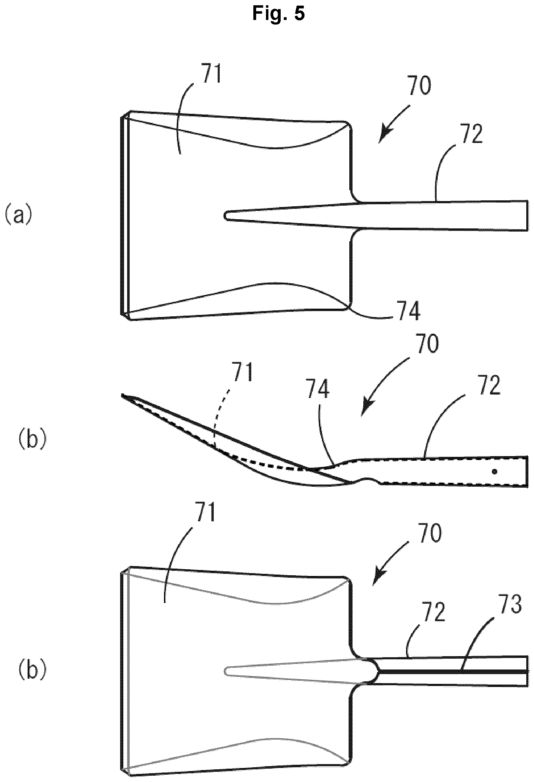

Fig. 5 shows a working part 70 of a scooping shovel; Fig. 5(a) is a plan view, Fig. 5(b) is side view, and Fig. 5(c) is a bottom view. Fig. 6 shows a state where the shovel's working part is fitted with the shaft which is provided with a handle; Fig. 6(a) is a plan view, and Fig. 5(b) is a side view.

The working part 70 of the shovel in Fig. 5 has a scooping blade 71 and a socket portion 72 provided at a rear end of the scooping blade 70 for the shaft 10. The socket portion 72 has a curved portion 74 curving toward an upper surface of the scooping blade 71, a longitudinal gap 73 in its lower surface along a center line, and a cylindrical shape as a whole with a generally C-shaped section and slightly increasing radius toward its rear end.

Fig. 6 shows a state where the shovel's working part 70 is fitted with the shaft; Fig. 6(a) is a plan view, whereas Fig. 5(b) is a side view.

As shown in Fig. 6, the swaged tip portion of the shaft 10 is inserted into the cylindrical socket portion 72 of the shovel's working part 70, and then the two parts are fixed together with a pin P. During the insertion, as the tapered end of the shaft 10 is pressed into the socket portion 72, the socket portion 72 is slightly expanded in its diameter to conform to the shape of the tip of the shaft 10. As the tip portion of the shaft 10 is inserted along an inner circumferential surface of the socket portion 72, the area of contact between the socket portion 72 and the shaft 10 is increased, resulting in decreased wobble and increased strength of the connecting portion. Also, since the shaft 10 is provided with the cutout 11 in its upper surface at the very end portion thereof, it is possible to insert the tip of the shaft 10 deep into the socket portion 72 without being stopped when it hits the curved portion 74 of the socket portion 72.

Fig. 7 shows other embodiments, i.e., shafts 10A and 10B in end views. Fig. 7(a) shows the shaft 10A, in which three curved ribs 40 (41, 41, 42) are provided equidistantly inside the shaft, whereas Fig. 7(b) shows the shaft 10B in which four curved ribs 50 (51, 52, 53, 54) are provided equidistantly inside the shaft. While a plurality of the curved ribs may be provided inside the shaft as exemplified, a suitable number of the curved ribs is two through four in consideration of an overall weight of the shaft.

The shafts 10, 10A, 10B having the arrangement described thus far are for attaching to working parts of hand tools such as shovels, scoops, spades, forks, pickaxes, hammers, hoes, plows, short-blade plows, rakes, prong rakes, blooms, weed scrapers, etc., used in agricultural, horticultural or earth work. Due to the swaging process (drawing process) performed to the tip portion, the hand tool shaft 10 can be attached easily and rigidly.

It should be noted here that the swaging process need not be performed to the shaft 10 if unnecessary. On the other hand, if it is necessary for attaching a handle for example, or for any other need, then the shaft 10 may receive the swaging process on its rear end portion or on both end portions.

Also, dimensions of the shafts 10, 10A, 10B such as thickness, length and so on may be appropriately selected depending on purposes of use. The same applies to dimensions of the curved ribs 30, 40, 50, including quantity, thickness, curvature and so on. Also, the arcuate section of the curved rib may have some irregularities as long as the overall shape is generally arcuate.

The other arrangements for the shafts 10, 10A, 10B and for the curved portions 30, 40, 50 may be changed in any way within the scope of intention of the present invention.

### REFERENCE SIGNS LIST

- 10: Hand tool shaft
- 10A: Hand tool shaft (Another embodiment)
- 10B: Hand tool shaft (Still another embodiment)
- 11: Cutout
- 20: Shaft main body (Pipe)
- 30 (31, 32): Curved rib
- 40 (42, 43): Curved rib (Another embodiment)
- 50 (53, 54): Curved rib (Still another embodiment)
- 60: Handle
- 70: Working part (Scooping shovel)
- 71: Scooping blade
- 72: Socket portion
- 73: Gap
- 74: Curved portion
- X: Swaged portion
- P: Pin

## Claims

1. A shaft of a hand tool for an agricultural, horticultural or an earth work, comprising a cylindrical, metal, shaft main body, and two or a greater number of curved ribs provided longitudinally inside the shaft main body, wherein
each curved rib is provided by a platy member having an arcuate section and formed integrally with the shaft main body so that a curved bulged portion of one curved rib is opposed to another curved bulged portion of another curbed rib inside the shaft main body without contacting each other, sharing a predetermined distance in between.

2. The shaft of a hand tool for an agricultural, horticultural or an earth work according to Claim 1, wherein two through four of the curved ribs are formed along an entire or partial length of the shaft main body.

3. The shaft of a hand tool for an agricultural, horticultural or an earth work according to Claim 1 or 2, wherein a swaging process is performed to one or two end portions of the shaft main body.

4. A hand tool for an agricultural, horticultural or earth work comprising the shaft according to Claim 1 or 2.

5. A hand tool for an agricultural, horticultural or earth work comprising the shaft according to Claim 3.
